# EUROPEAN PATENT APPLICATION

(11) **EP 0 875 138 A1**
(43) Date of publication of application: **04.11.1998**
(21) Application number: 97201308.0
(22) Date of filing: 01.05.1997
(51) Int. Cl.: A01G 31/04

(54) **Method and apparatus for growing plants**

(71) Applicant: Greenstar the Cyclonical Greenhouse Company B.V., 9415 TR Hijken (NL)
(72) Inventor: van Kaam, Cornelis Jacobus Henricus Maria, 6721 HX Bennekom (NL)
(74) Representative: Smulders, Theodorus A.H.J., Ir.

(57) **Abstract**

Method and apparatus for growing plants, wherein the plants are located on a growth surface and, during the growth, are displaced by means of displacement means along a number of juxtaposed, elongated conveyance channels (18) between a supply end and a discharge end of the conveyance channels (18), wherein from the supply end to the discharge end of the conveyance channels (18), the intermediate distance between adjacent conveyance channels (18) as well as between adjacent plants located in the same channel is increased, wherein, for displacing the plants along the conveyance channels (18), a processing boom (50) is used which has the shape of a bridge construction spanning the growth surface, which, in operation, is moved over the plants.

## Description

The invention relates to a method and apparatus for growing plants, wherein the plants are located on a growth surface and, during the growth, are displaced by means of displacement means along a number of juxtaposed, elongated conveyance channels between a supply end and a discharge end of the conveyance channels, and wherein from the supply end to the discharge end of the conveyance channels, the intermediate distance between adjacent conveyance channels as well as between adjacent plants located in the same channel is increased.

Such a method and apparatus are known from Dutch patent application 8502774. Dutch patent application 8502774 describes a first embodiment, wherein, on a rectangular bottom surface of a greenhouse, sets of straight conveyance channels are disposed, which channels are positioned side by side, yet converging relative to each other. Successive groups of conveyance channels in each case diverge in opposite direction. Disposed in the conveyance channels are plant holders, which, during the growth cycle of the plant, are conveyed stepwise from one end of the conveyance channels, where the conveyance channels lie closely side by side, to the other end, where the conveyance channels are spaced apart. The conveyance takes place by means of a carrier rod or carrier cord, by means of which all plant holders located in a similar position in the conveyance channels of a set are displaced simultaneously. In fact, the plant holders located in a similar position form a row, and for each row a separate carrier rod or a separate carrier cord has been provided. As the conveyance channels diverge, an increasingly large growing space is created for each plant in lateral direction. In the longitudinal direction, the conveyance channels are divided into sections, each section having its own conveying mechanism. Each conveying mechanism has a larger travel than the conveying mechanism of a preceding section, as a result of which the plants get more room also in the direction of travel according as the plants are conveyed further along the conveyance channel. At the diverging end, i.e. the discharge end, of the conveyance channels, the plants are harvested.

The channels are shaped as troughs which are slightly inclined and through which, in operation, water flows.

Although this known arrangement enables a fairly efficient use of the available bottom surface, it is a drawback that both the input of young plants and the harvesting of the full-grown plants should take place at two opposite, spaced longitudinal sides of the rectangular bottom surface.

Also, each group of conveyance channels requires separate displacement means.

These drawbacks occur to a lesser extent, if at all, in a second possible arrangement shown in Dutch patent application 8502774, wherein the conveyance channels extend radially from points located adjacent the center of a circle. The young plants are fed to the conveyance channels from the center of the circle and harvested at the circumference of the circle. This configuration does not yet involve an optimum use of the available space either. In particular, because of the wedge-shaped spaces between the conveyance channels, it is not possible to arrive at an optimum utilization of the available space starting from the growth curve of the plants.

To both known techniques, it applies that during a substantial part of the growth cycle, the plants are not accessible, or only with great difficulty, for inspection and/or treatment.

The object of the invention is to provide an improved growth method for plants, wherein the above-described drawbacks occur to a lesser extent, if at all. More in particular, the object of the invention is to provide an efficient growth method wherein optimum use is made of the available surface, and wherein intermediate inspection and/or treatment remains possible.

To this end, according to the invention, a method of the type described is characterized in that for displacing the plants along the conveyance channels, a processing boom is used which has the shape of a bridge construction spanning the growth surface, which, in operation, is moved over the plants.

According to the invention, an apparatus of the above-described type is characterized by a processing boom spanning the growth surface, which comprises drive means for moving the processing boom over the growth surface and further comprises displacement tools for displacing plant units present in the conveyance channels.

Hereinafter, the invention will be further described with reference to the accompanying drawings of an exemplary embodiment.
Fig. 1 schematically shows a view of a greenhouse suitable for application of the invention;
Fig. 2 schematically shows a practical realization of a greenhouse cover for the greenhouse of Fig. 1;
Fig. 3 schematically shows the layout of the inner space of a greenhouse according to Fig. 1;
Fig. 4 schematically shows a partial, radial section of a greenhouse according to Fig. 1;
Fig. 5 shows two details of Fig. 4;
Fig. 6 schematically shows, in top plan view, an example of a conveyance channel for use in an apparatus according to the invention;
Fig. 7 schematically shows, in cross section, an example of trough that can be used as a conveyance channel;
Fig. 8 schematically shows a complete trough for use in an apparatus according to the invention;
Fig. 9 and Fig. 10 schematically show some details of the trough of Fig. 8;
Fig. 11 schematically shows, in side elevation, a pot holder for use in an apparatus according to the invention;
Fig. 12 schematically shows a top plan view of the pot holder of Fig. 11;
Fig. 13 schematically shows a number of pot holders disposed in conveyance channels;
Fig. 14 schematically shows, in side elevation, a plant holder for use in an apparatus according to the invention;
Fig. 15 schematically shows a processing boom for use in an apparatus according to the invention;
Fig. 16 schematically shows, in top plan view, an example of the position of a plant displacement tool relative to the conveyance channels;
Fig. 17 and Fig. 18 schematically show, in top plan view and in side elevation, an example of a processing boom applicable in an apparatus according to the invention;
Fig. 19 schematically illustrates the operation of a preferred embodiment of a plant displacement tool according to the invention;
Fig. 20 schematically illustrates the conveying flows in an apparatus according to the invention;
Fig. 21 schematically shows a possible configuration of plant locations; and
Fig. 22 schematically shows, in top plan view, an example of a system of conveyance channels for an apparatus according to the invention.

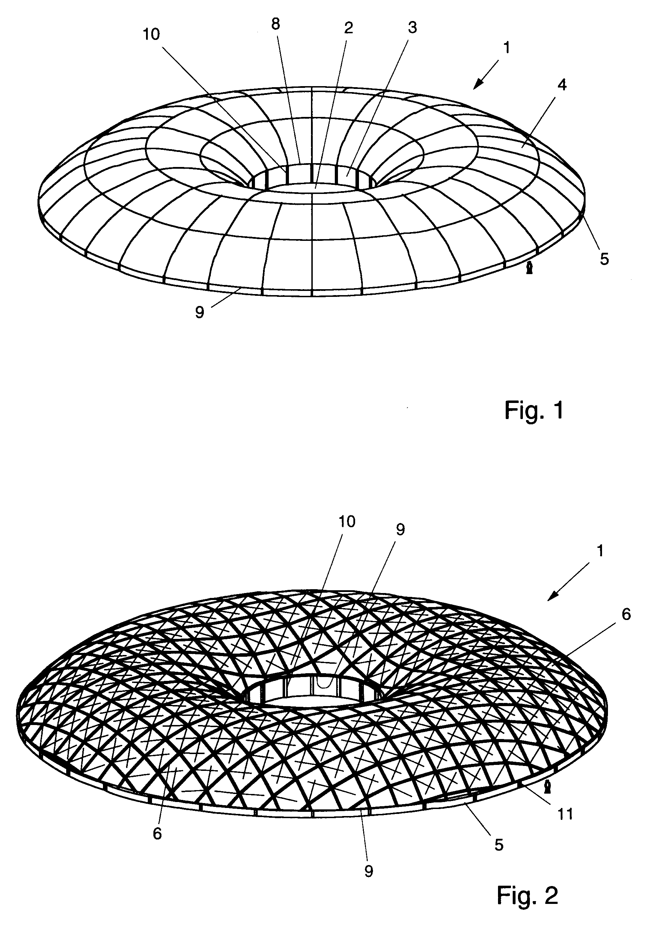

Fig. 1 schematically shows the global shape of a greenhouse 1 in which the invention can be applied. The greenhouse has an external shape which resembles that of a tunnel greenhouse and is curved round so as to be annular, to produce a kind of turban shape having a circular, open central portion 2 with an inner wall 3. The greenhouse cover 4 is domed and the greenhouse has an outer wall 5.

By means of known techniques, a thus shaped greenhouse can be built up as a net construction of steel sections 6, forming diamond-shaped openings, and tension cables. The diamond-shaped openings are in turn closed by panels 7 of, for instance, aluminum sections provided with a suitable, light-transmitting film or plate material. Preferably, the film or the plate material is provided on either side of the panels. A suitable technique for building up a net construction for a light-transmitting covering is for instance described in the journal 'Thermisch Verzinken', September 1993, ed. Stichting Doelmatig Verzinken, Sassenheim.

The greenhouse cover rests on an inner and an outer circular girder construction 8,9, which are in turn supported by columns 10,11. Mounted between the columns are again light-transmitting panels.

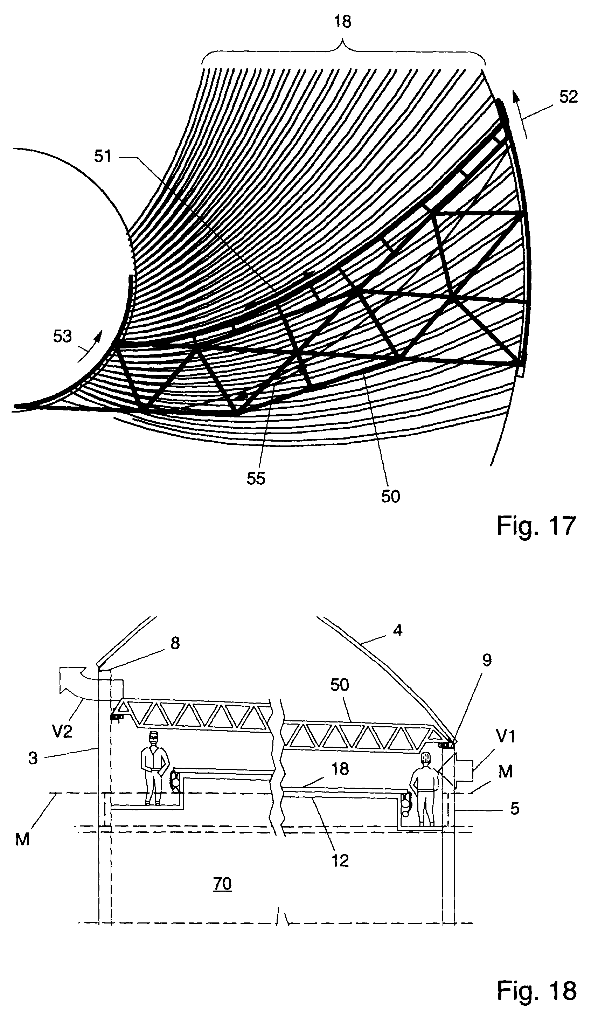

Preferably, vent holes are provided in the vertical walls, as is for instance indicated by arrows V1, V2 in Fig. 18. The greenhouse cover itself can then be of an entirely closed design.

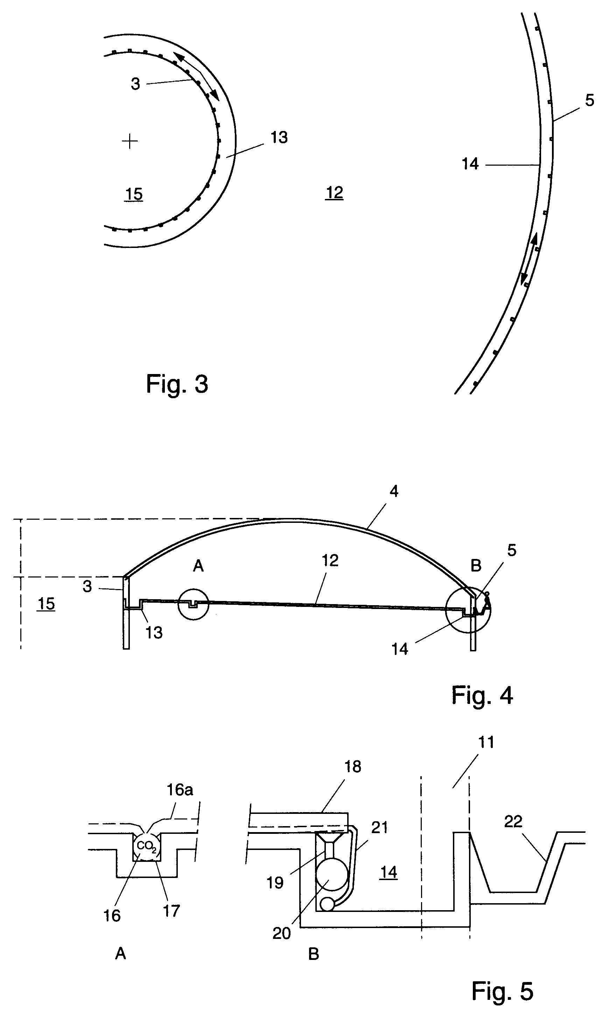

Fig. 3 shows a partial plan of a greenhouse according to the invention. The inner wall 3 and the outer wall 5 form substantially concentric circles, between which an annular growth surface 12 is located. This is also schematically shown, in cross section, in Fig. 4. As shown, the growth surface 12 is bounded, preferably on the inner side as well as on the outer side, by a work ring 13,14. Via the work rings, the inner and outer ends of the conveyance channels disposed on the growth surface are accessible and the plants can be fed to the growth surface or discharged therefrom.

The central circular area 15, which does not belong to the greenhouse space proper, can accommodate various technical installations, office space, work room for preparing plant units, etc., and can for that purpose be covered separately, if necessary.

As is already mentioned, conveyance channels for plant units are provided on the growth surface. The conveyance channels are trough-shaped and will be described in more detail hereinbelow. Fig. 5 schematically shows the details A and B of Fig. 4.

Detail A concerns a CO₂ fertilizing system. By the heating installation for the greenhouse, which heating installation is not shown, CO₂ is produced, which, via a ring line 16 in a trough 17 provided in the growth surface, is fed to perforated pipes 16a or the like, lying between the conveyance channels. In this manner, CO₂-rich air can be introduced between the plants. Obviously, CO₂ can also be obtained from a source other than the heating installation, if so desired.

Detail B shows the outer work ring 14 with the end of one of the conveyance channels 18. In this example, the ends of the conveyance channels extend into the outer work ring and comprise an outlet pipe 19 for water, which, via a ring line 20, can be connected to a pump, and a passage for a heating hose 21, which in this example lies on the bottom of the relevant trough-shaped conveyance channel. The conveyance channels are preferably disposed so as to be slightly downwardly inclined outwards, so that water fed to the inner end, which water may for instance also contain nutrients, disinfectants, pesticides, herbicides and the like, automatically flows to the outer end. For this purpose, for instance the growth surface, which may for instance be made of concrete, can be slightly inclined, as shown in Fig. 4 and also in Fig. 18.

Detail B further shows a rain water trough 22 lying outside the outer wall 5 of the greenhouse. Preferably, the level of the growth surface at the outer work ring is approximately at the ground level. In Fig. 18, this level is indicated by M. The work rings are preferably deepened, as shown, to create an ergonomically favorable situation.

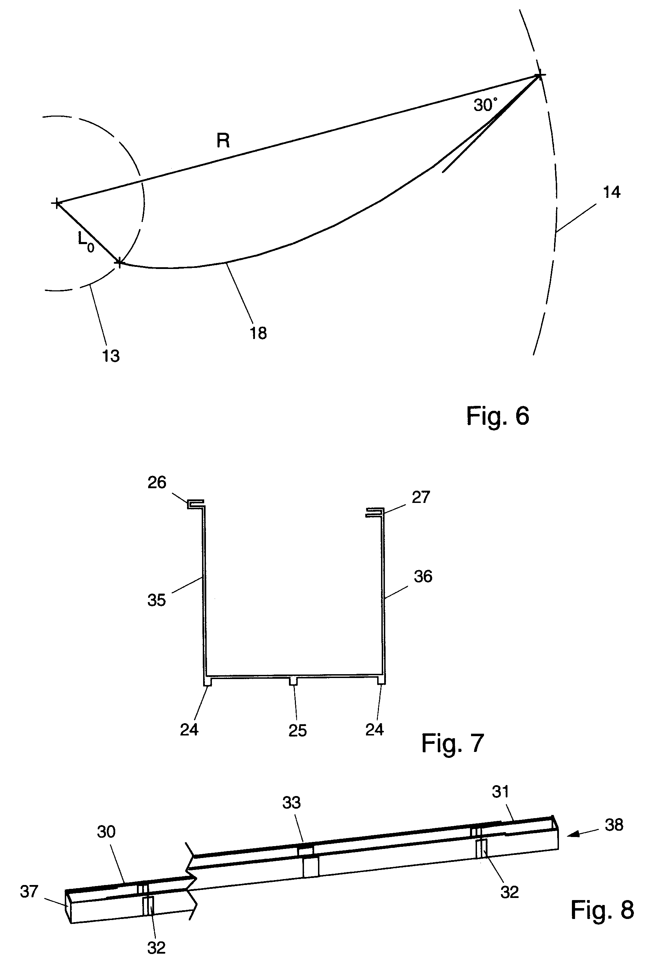

Fig. 6 schematically shows an example of a curved shape for the conveyance troughs 18. The shaped shown is at least partly substantially a logarithmic curve. The exact shape is connected with the desired position of the plant locations relative to one another and/or the growth curve of the plant. A plant location is a space available for one plant. The plant locations can be represented by circles, which are larger according as they lie further from the center of the greenhouse, corresponding to the development of the plants during the growth cycle. Plant locations of the same radius lie equally far from the center and hence lie in a circular row around the center. Viewed from the center of the greenhouse, the corresponding plant locations in successive circular rows can lie in a straight line one behind the other and thus lie on radiuses R of the greenhouse. In that case, the conveyance troughs should have the shape of these radiuses and are hence linear.

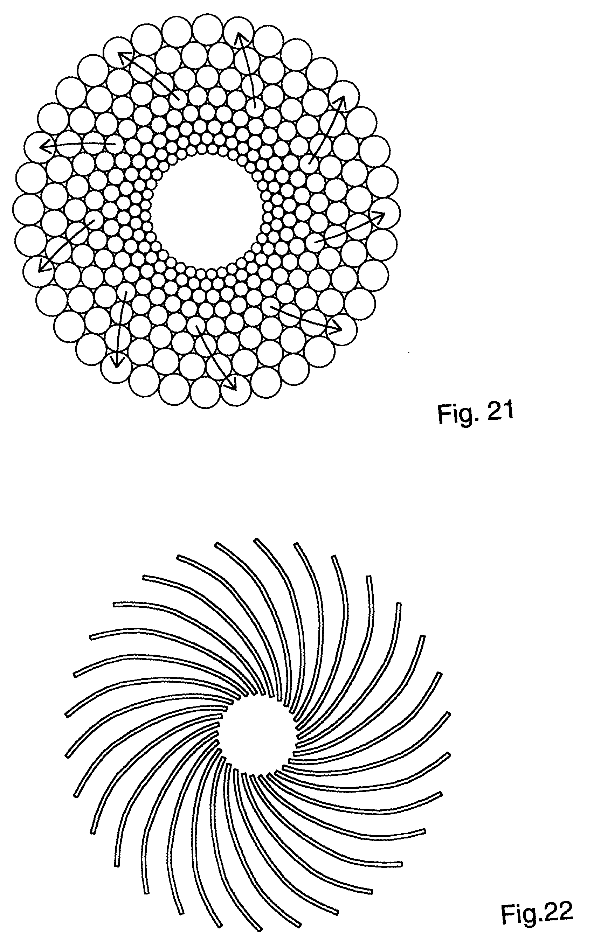

However, a more efficient surface utilization becomes possible by positioning the plant locations in successive rows so as to be staggered relative to one another, rather than in a straight line one behind the other, so that, in each case, a plant location from a row lies slightly between two plant locations from a preceding row and between two plant locations from a following row, see for instance Fig. 21. Then, the associated conveyance troughs preferably have a curved shape. The conveyance troughs on the growth surface then reveal a cyclonic pattern, as shown in Fig. 22.

A configuration of plant locations, also referred to as arrangement of plants, wherein the plant locations of each row are staggered along the row by half a plant location relative to the preceding row results in a so-called triangular arrangement. When the space is optimally utilized, all plant locations adjoin one another. In a triangular arrangement, each plant location adjoins six surrounding plant locations. The centers of a plant location on a random row and two adjoining plant locations on an adjacent row form the vertices of an isosceles triangle which is almost equilateral. An example of such triangular arrangement is schematically shown in Fig. 21. The circles, whose diameters increase outwardly in accordance with the growth of the plants, represent the plant locations and the arrows indicate the direction along which the plants, in operation, travel from plant location to plant location.

The associated shape of the conveyance troughs is shown in Fig. 22. In view of this shape, a cyclonic plant arrangement is referred to.

The exact shape of the troughs depends on the growth curve of the plants. This growth curve is mostly exponential, although the growth curve is sometimes not exponential at the beginning and the end of the growth cycle. The portion of the conveyance troughs where the plants are located during the exponential part of the growth curve is preferably logarithmically curved. The other parts, if any, which are normally located at the beginning and/or the end of the conveyance channels, have a shape depending on the shape of the growth curve.

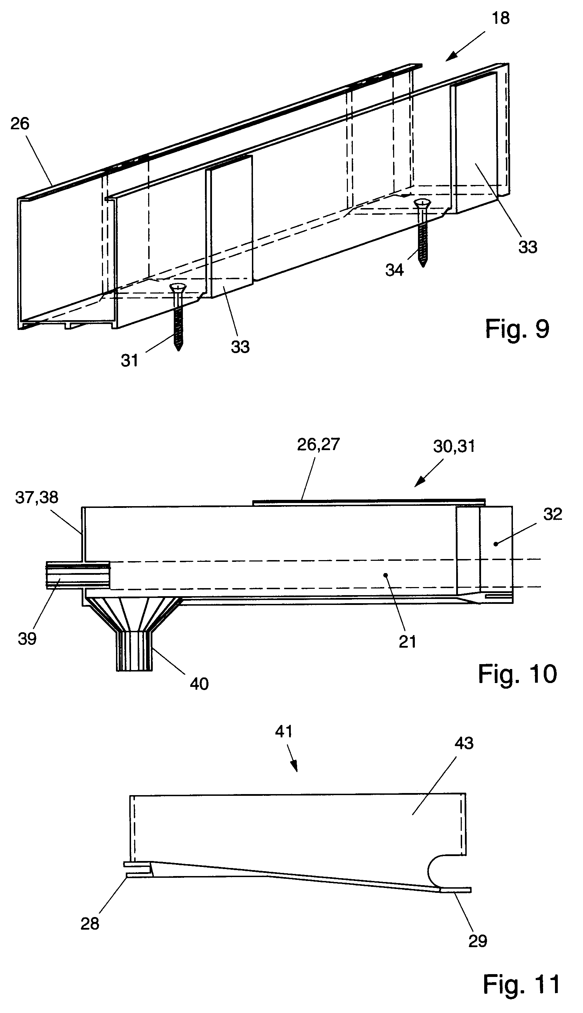

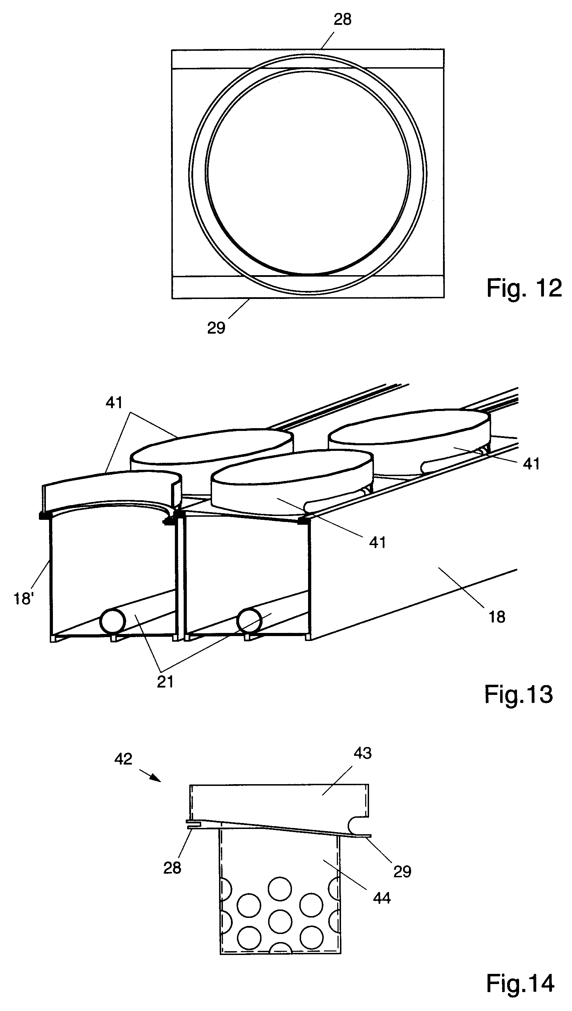

Fig. 7 schematically shows a section of a suitable conveyance trough 18. The trough shown is U-shaped and has in this example its bottom side provided with support ribs 24,25. Preferably, the troughs are manufactured from a suitable plastic or a coated or noncoated metal plate material. The troughs comprise guide members for plant units. The plant units may exist of a plant holder 42, as shown in Fig. 14, or a pot holder 41, as shown in Fig. 11 and Fig. 12.

In the example shown, the walls of the troughs are in each case provided with two C-shaped guide profiles 26,27, which are inwardly open and can slidably receive corresponding flanges 28,29 of the plant units. In this example, one C-shaped profile is constructed as a C-shaped flange positioned so as to be outwardly staggered.

Fig. 8 shows a complete trough 18 (from which a part has been left out) having a beginning section 30 and an end section 31. The different sections of the trough 18 are attached to one another by means of coupling pieces 32. The central part may also be composed of different sections, coupled by coupling pieces 33, as shown in Fig. 8.

If so desired, the coupling pieces may form in integral part of an associated section. The coupling pieces may also be constructed for attachment of the troughs to the growth surface, but for this purpose, separate fastening pieces may optionally be used. A manner of fastening by means of screws 34 is schematically shown in Fig. 9. The coupling and fastening pieces are preferably shaped so that the troughs at that locations lie flat on the growth surface. For this purpose, the support ribs may be locally removed, if necessary.

Fig. 7 shows that one trough wall 35, having the outwardly extending guide profile 26, extends higher than the other trough wall 36. This allows the troughs to be more closely spaced at the beginning thereof, while the same cross dimension is maintained.

The beginning and end sections shown in Fig. 8 need not necessarily be curved in the same manner as the rest of the trough. The beginning and end sections serve to enable plant units to be inserted into or removed from the trough. For this purpose, these sections are only partly provided with guide profiles, so that the plant units can be inserted from above or removed upwards. The outer ends of the beginning and end sections are closed by sidewalls 37,38, because in the troughs, in operation, liquid may flow.

Fig. 10 schematically shows an example of an end section 30 or 31, with a coupling piece 32, an end wall 37,38, a passage 39 for a heating hose 21 and an inlet or outlet piece 40.

Figs. 11 and 12 show a pot holder 41 and Fig. 14 shows a plant holder 42. The pot holder substantially consists of a ring 43 which is provided with guide flanges and into which a plant pot can be inserted, while the plant holder further comprises, in addition to a similar ring, a pot portion 44 into which a piece of breeding soil comprising a seedling can be inserted. The pot portion is provided with openings, allowing the breeding soil to be moistened by the water that may flow through the trough. Preferably, the water is passed through the troughs according to an ebb/flow principle.

Fig. 13 schematically shows two troughs 18, 18' lying closely side by side, into which a number of pot holders have been inserted according to the above-described staggered arrangement. One of the pot holders is drawn only partly.

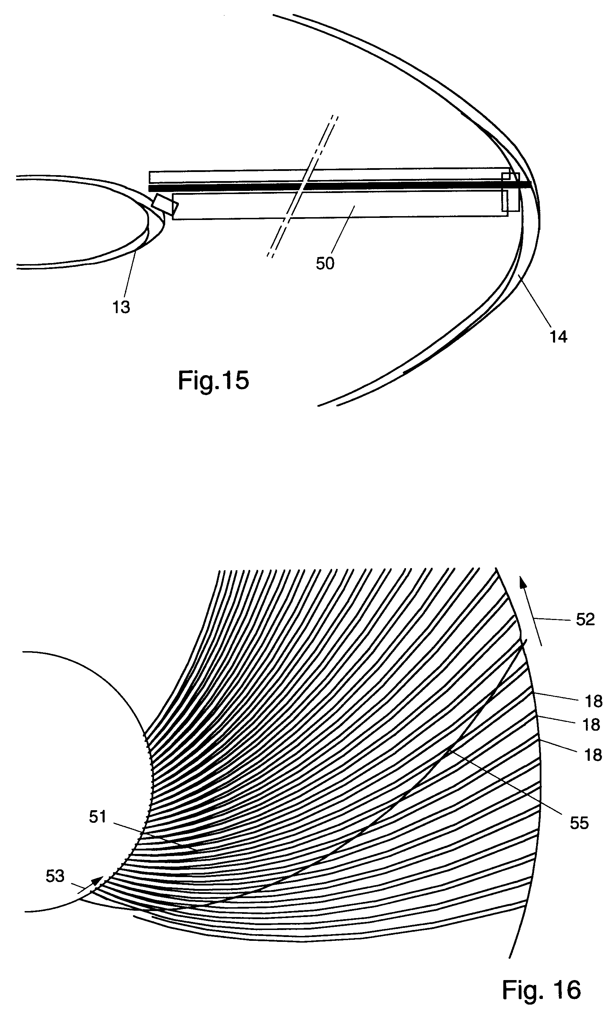

Fig. 15 schematically shows a processing boom 50, spanning the growth surface and capable of moving above the plant and over the annular growth surface. The processing boom is a tool carrier, carrying tools for conveying the plants. The processing boom may also carry devices for observing or otherwise inspecting and/or tending the plants, such as, for instance, a camera and a spraying device or the like.

The processing boom should be firm but light, and can advantageously be designed as a lattice structure, as shown in side elevation in Fig. 18 and in top plan view in Fig. 17.

Via suitable support members, such as, for instance, wheels or rollers, the processing boom has its outer ends resting on an inner and an outer rail, formed or mounted on or adjacent the inner and outer circular girders. For the drive thereof, pulling cables or one or more electromotors mounted on the processing boom can be used. For this purpose, for instance one of the girders can be provided with a current-carrying rail. The construction can also be such that the wheels or rollers at one or both outer ends run in a work ring.

The observation and/or tending devices can be reciprocably suspended from a rail or the like extending along the processing boom. Preferably, the rail has a shape such that, during the movement of the processing boom, all plants of a trough can be inspected and tended in succession. Fig. 16 schematically shows such a rail at 51. Arrows 52,53 indicate the direction of travel of the rail 51 above the growth surface.

A very important function of the processing boom is the displacement of the plants along the troughs. To this end, the processing boom can be provided with suspended braces having horizontal pusher rods at the bottom sides thereof, which pusher rods, at the level of the rings 43 of the plant units, extend at an angle relative to the circular rows of plant locations. The braces and pusher rods form part of the displacement tools. The pusher rods engage the rings 43 and can, during the advancement of the processing boom, push the plant units precisely into a following row of plant locations. However, as the following rows of plant locations are occupied by plant locations that are already located there, the following plant locations should first be cleared. This means that the outer plant units should be shifted first and the inner ones last. Hence, the outer pusher rod should engage the plant units first, after which the one but outer pusher rod can be put into action, etc.

In the case of a substantially symmetrical suspension of the pusher rods, this can for instance be established by arranging the suspension points of the pusher rods according to a line which includes an angle with the troughs. However, the pusher rods can also be attached to the processing boom in a different manner, for instance asymmetrically, to achieve a similar effect.

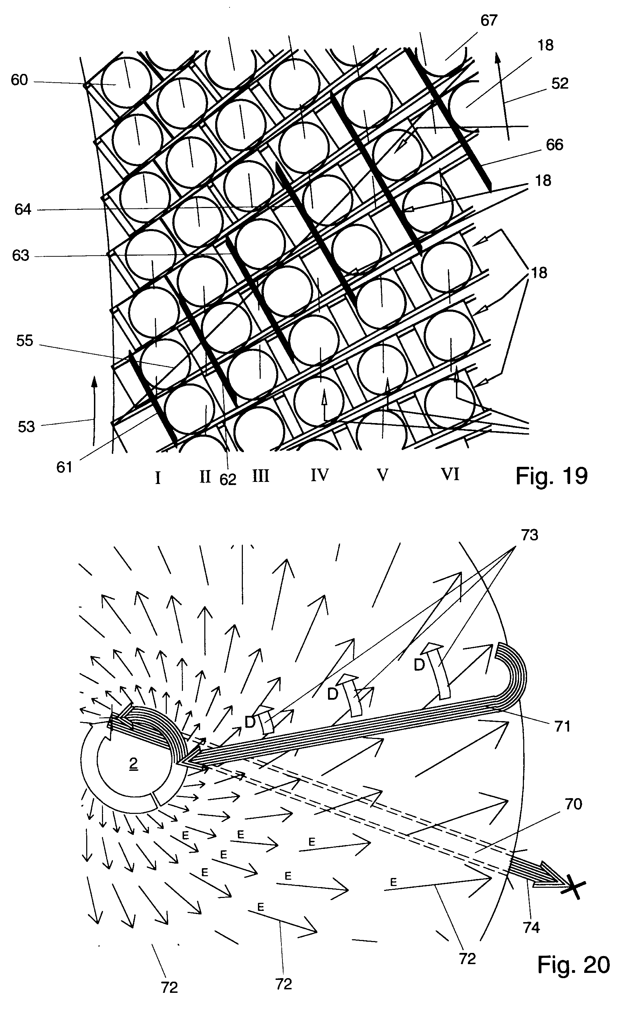

The above is schematically shown in Figs. 16,17 and in Fig. 19. In Figs. 16,17 and Fig. 19, the line through the suspension points of the pusher rods is indicated by 55.

Because the suspension points of the pusher rods are spaced from the rail 51, the processing boom in this example is fairly wide in top plan view, as shown in Fig. 17. Of course, it is also possible to use several bridge constructions, each having a specific function.

Fig. 19 shows a part of the growth surface provided with troughs 18, in which plant units 60 are arranged in circular, concentric rows, symbolized by interrupted lines I-VI through the centers of the plant units.

The pusher rods 61,62,63,64,65,66 are suspended from points symbolized by the line 55. The angle between the line 55 and the troughs can, in a practical situation, be about 15°.

Fig. 19 shows that the pusher rod 66 first engages the associated plant units. The outer plant unit 67 (a trough in row VI) has for instance already been moved outwards by the pusher rod 66, while the plant unit 68 on the same trough in row V has only just come into engagement with the pusher rod 65. Consequently, the successive pusher rods successively push the plant units of row VI to the row VII, not shown, the plant units of row V to row VI, etc., until the plant units of row I have been displaced to row II. Row I can then be filled with fresh plant units, which, after a rotation of the processing boom, are again displaced to row II, etc.

The new plant material can advantageously be supplied to the center of the greenhouse via a tunnel 70. Such a tunnel is shown in Fig. 18 and in Fig. 20.

Next, the plant material can be inserted into the troughs manually or automatically by means of an inserting apparatus.

The plant units of the outer row can be harvested manually or automatically by means of a plant removal apparatus.

In a possible embodiment, the harvested plants can be conveyed to the center of the greenhouse for further processing and/or discharge, by means of a conveyor mounted on the processing boom or another bridge construction, as indicated schematically at 71 in Fig. 20.

Fig. 20 illustrates the conveying flows that occur in such a system. The arrows 72, directed outwards from the center 2 of the greenhouse in the form of a fan, symbolize the cyclonic outward conveying movement via the troughs. The arrows 73 symbolize the movement of the processing boom. The thick arrow 71 symbolizes the inward conveyance of the harvested plants and the thick arrow 74 symbolizes the discharge of the harvested goods through the tunnel 70.

It is observed that after the foregoing, various modifications readily occur to a skilled person. For instance, the plant holders and/or the pot holders can be designed differently, for instance with a raised edge or collar on the push side exclusively. Also, a different arrangement of plants can be opted for and, by means of an adjusted trough shape, a changing growth pattern of a specific plant during the growth cycle can be taken into account. Further, if so desired, the discharge of the harvested material can take place around the outside.

In the foregoing, the invention has been described on the basis of the application thereof in a greenhouse. However, it is not strictly necessary to use a greenhouse. In warm countries, the above-described growth method according to the invention could also take place in the open air. The advantages of a growth method according to the invention, wherein the plants move inside out along predetermined paths over an annular growth surface, can be obtained both in the case of a stepwise displacement of the plants and in the case of a substantially continuous displacement. The annular surface can be bounded by circles on the inner and outer edges, but the edges may also have other shapes, for instance elliptic, polygonal, etc.

As the growth curve of individual plants exhibits deviations from the average growth curve and, moreover, the growth curve generally depends on the season, measures can be taken to adapt the growth system thereto. Deviations resulting from seasonal influences can be set off by adjusting the plant locations, which means that the displacement tools should be adjustable relative to each other. Variations between individual plants can for instance be set off by harvesting more than one row along the circumference of the growth surface. Optionally, the observation means can be used for determining which plants are ready for harvesting. The empty places thus created in the last rows can then also be used for putting back plants that have reached the end of the conveyance trough but that are not yet ready for harvesting.

The displacement tools described hereinabove establish a stepwise displacement of the plant units from plant location to plant location. However, in principle, a continuous movement of the plant units is likewise possible.

These and similar modifications are understood to fall within the framework of the invention.

## Claims

1. A method for growing plants, wherein the plants are located on a growth surface and, during the growth, are displaced by means of displacement means along a number of juxtaposed, elongated conveyance channels between a supply end and a discharge end of the conveyance channels, wherein from the supply end to the discharge end of the conveyance channels, the intermediate distance between adjacent conveyance channels as well as between adjacent plants located in the same channel is increased, **characterized in that** for displacing the plants along the conveyance channels, a processing boom is used which has the shape of a bridge construction spanning the growth surface, which, in operation, is moved over the plants.

2. A method for growing plants, wherein the plants are located on a growth surface and, during the growth, are displaced by means of displacement means along a number of juxtaposed, elongated conveyance channels between a supply end and a discharge end of the conveyance channels, wherein from the supply end to the discharge end of the conveyance channels, the intermediate distance between adjacent conveyance channels as well as between adjacent plants located in the same channel is increased, **characterized in that** the plants are displaced along the conveyance channels from plant location to plant location, said plant locations increasing in dimension from the beginning to the end of the conveyance channels, depending on the growth curve of the plants, and said plant locations being in triangular arrangement on at least a part of the growth surface.

3. A method according to claim 1 or 2, **characterized in that** the plants are placed in plant units, which are then inserted into the channels at the supply end, the plant units having an edge projecting above the channels, which edge can be engaged by displacement tools suspending from the processing boom for displacing the plants along the channels.

4. A method according to claim 2 or 3, **characterized in that** the plants are successively displaced in a channel, starting with the plants located closest to the discharge end.

5. A method according to any one of the preceding claims, **characterized in that** for tending and/or inspecting the plants on the growth surface, use is made of means disposed above the growth surface.

6. A method according to claim 5, **characterized in that** said means, in operation, are moved back and forth over the growth surface.

7. A method according to any one of the preceding claims, **characterized in that** the growth surface is annular and is bounded by a work ring on the inside as well as on the outside.

8. A method according to any one of the preceding claims, **characterized in that** the processing boom is moved over the annular growth surface, one end following substantially the inner edge and the other end following substantially the outer edge of the growth surface.

9. A method according to claim 7 or 8, **characterized in that** the plant holders are inserted into the conveyance channels at the inner edge of the growth surface and are removed therefrom at the outer edge of the growth surface.

10. A method according to any one of claims 7-9, **characterized in that** the free space located within the inner work ring is at least partly utilized as facility space.

11. A method according to any one of claims 7-10, **characterized in that** the plants removed from the conveyance channels are conveyed, via a conveyor extending above the growth surface, to the center of the growth surface for further treatment.

12. A method according to any one of claims 6-10, **characterized in that** the center of the growth surface is accessible via a tunnel provided under the growth surface.

13. A method according to any one of claims 7-12, **characterized in that** trough-shaped conveyance channels are used, comprising guide means for slidably receiving the plant units.

14. A method according to claim 13, **characterized in that** the guide means are formed by flanges formed adjacent the upper edges of the trough-shaped channels.

15. A method according to claim 14, **characterized in that** the upper edges of a trough-shaped channel lie at different heights above the bottom of the trough-shaped channel.

16. A method according to any one of claims 13-15, **characterized in that** special beginning and end sections for the trough-shaped channels are used for enabling the plant units to be inserted into the channels or to be removed therefrom.

17. A method according to any one of claims 7-16, **characterized in that** curved channels are used.

18. A method according to claim 17, **characterized in that** the channels contain a portion curved according to a logarithmic curve.

19. A method according to any one of the preceding claims, **characterized in that** plant units are positioned on plant locations that are staggered in adjacent rows, so that, in operation, a plant unit in one channel row partly lies between two plant units of an adjacent row.

20. An apparatus for growing plants, wherein the plants are located on a growth surface and, during the growth, are displaced by means of displacement means along a number of juxtaposed, elongated conveyance channels between a supply end and a discharge end of the conveyance channels, and wherein from the supply end to the discharge end of the conveyance channels, the intermediate distance between adjacent conveyance channels as well as between adjacent plants located in the same channel is increased, **characterized by** a processing boom spanning the growth surface, wherein drive means are provided for moving the processing boom over the growth surface, said processing boom comprising displacement tools for displacing plant units present in the conveyance channels.

21. An apparatus according to claim 20, **characterized by** inspection and/or tending devices for the plants, movable over the growth surface.

22. An apparatus according to claim 21, **characterized in that** the processing boom comprises a rail along which the inspection and/or tending devices can move back and forth.

23. An apparatus according to any one of claims 20-22, **characterized in that** the growth surface is an annular surface covered by an annular and tunnel-shaped greenhouse cover resting on inner and outer circular, light-transmitting walls.

24. An apparatus according to claim 23, **characterized in that** on or adjacent the circular walls, circular guide members are provided for supporting and guiding the ends of the processing boom.

25. An apparatus according to any one of claims 20-24, **characterized in that** the processing boom comprises depending braces, each brace comprising, at its lower ends, a substantially horizontally extending pusher rod capable of cooperating with a raised edge of a plant unit.

26. An apparatus according to claim 25, **characterized in that** pusher rods extend obliquely relative to the direction of movement of the processing boom and obliquely relative to the direction of the conveyance channels.

27. An apparatus according to claim 25 or 26, **characterized in that** the pusher rods are positioned relative to one another so that the plant units located closest to the discharge ends of the conveyance channels are engaged first.

28. An apparatus according to any one of claims 20-27, **characterized in that** the processing boom is constructed according to a lattice construction.

29. An apparatus according to any one of claims 23-28, **characterized in that** the greenhouse cover is an entirely closed greenhouse cover and that vent holes are provided in the circular walls.

30. An apparatus according to any one of claims 20-29, **characterized in that** the conveyance channels are U-shaped troughs whose upper edges are provided with guide flanges capable of slidably receiving counter-flanges of the plant units.

31. An apparatus according to claim 30, **characterized in that** the troughs have sidewalls of different heights.

32. An apparatus according to claim 30 or 31, **characterized in that** the troughs comprise beginning and end sections, which are closed at their ends and at least partly do not have guide flanges for enabling the plants to be inserted into the troughs or removed therefrom.

33. An apparatus according to claim 32, **characterized in that** the closed ends are provided with a passage for a heating hose.

34. An apparatus according to any one of claims 20-33, **characterized by** supply means for CO₂, which supply means open between the channels.

35. An apparatus according to any one of claims 20-34, **characterized in that** the greenhouse cover is built up according to a net structure with sections and cables, said structure being closed with panels provided with transparent film or plates.

36. An apparatus according to any one of claims 20-35, **characterized in that** the plant units comprise a horizontal portion for cooperation with and guidance in the conveyance channels, and a raised edge for cooperation with the displacement tools.

37. An apparatus according to any one of claims 11-36, **characterized by** an automatic plant-providing apparatus for inserting the plant units into the conveyance channels.

38. An apparatus according to any one of claims 20-37, **characterized by** an automatic plant-removing apparatus for removing the plant units from the conveyance channels.

39. An apparatus according to any one of claims 23-38, **characterized by** a conveyor, provided above the growth surface, for conveying plant units removed from the conveyance channels at the discharge ends, to the central area enclosed by the growth surface.

40. An apparatus according to any one of claims 23-39, **characterized by** a tunnel extending under the growth surface, said tunnel providing access to the central area enclosed by the growth surface.

41. An apparatus according to any one of claims 23-40, **characterized in that** the conveyance channels are curved channels.

42. An apparatus according to claim 41, **characterized in that** the channels have a portion that is curved according to a logarithmic curve.

43. An apparatus according to any one of claims 23-42, **characterized in that** along the inner edge and/or the outer edge of the growth surface, a work ring is provided.

44. An apparatus according to claim 43, **characterized in that** the work ring(s) is (are) deepened relative to the growth surface.
